# EUROPEAN PATENT SPECIFICATION

(11) **EP 3 275 351 B1**
(45) Date of publication and mention of the grant of the patent: **06.03.2024**
(21) Application number: 16768951.2
(22) Date of filing: 25.03.2016
(51) Int. Cl.: C08L 67/04, C08L 67/03, C08K 3/34, C08K 3/22, B65D 1/00, A47J 36/04

(54) **OVENWARE**
FEUERFESTES GESCHIRR
PLAT ALLANT AU FOUR

(30) Priority: 26.03.2015 JP 2015064234
(43) Date of publication of application: 31.01.2018
(73) Proprietor: Sumitomo Chemical Company, Limited, Tokyo 103-6020 (JP)
(72) Inventor: SAITO, Shintaro, Shanghai 200050 (CN); MIZUMOTO, Koichi, Niihama-shi, Ehime 792-8521 (JP)
(74) Representative: Vossius & Partner Patentanwälte Rechtsanwälte mbB
(86) International application number: PCT/JP2016/059682
(87) International publication number: WO 2016/153048

(56) References cited:
- JP-A- H03 502 818
- JP-A- H04 202 557
- JP-A- S60 124 649
- JP-A- 2002 294 038
- JP-A- 2005 537 379
- JP-A- 2012 107 221
- JP-A- 2012 206 435
- JP-A- 2012 206 436
- JP-A- 2013 194 165
- JP-A- 2013 203 997
- US-A- 6 093 765

## Description

### TECHNICAL FIELD

The present invention relates to ovenware .

### BACKGROUND ART

Ovenware, which describes heating containers for cooking in oven ranges that employ oven heating methods, requires a variety of characteristics, including excellent heat resistance and mechanical strength, and favorable external appearance.

Examples of materials having excellent heat resistance include polyester resins. Among these resins, fully aromatic polyester resins (hereinafter sometimes referred to as "liquid crystal polyesters" or "liquid crystal polyester resins") have a variety of excellent properties based on the resin structure, and are particularly superior in terms of heat resistance. As a result, they are employed as a material for ovenware that is exposed to high temperatures. For example, Patent Documents 1 and 2 disclose ovenware that uses fully aromatic polyester resins.

Patent Document 3 relates to a liquid-crystal polyester resin composition which comprises: a) 35-85 wt. % of a wholly aromatic polyester which is melt processable and which displays anisotropy in the molten state; and b) 15-65 wt. % of a platelet-shaped filler having a mean particle size of less than 5 microns.

Patent Document 4 concerns a polymer composition comprising a liquid crystalline polymer and metal particles having a particle size, wherein the particle size of at least 90 weight % of the metal particles is greater than about 200 um.

Patent Document 5 relates to compositions comprising 30-80 wt% fully aromatic polyesters having repeating units of a specific formula, 5- 60 wt% talc, and 5-60 wt% TiO₂.

Patent Document 6 concerns a liquid crystal polyester resin composition having an apparent melt viscosity of 10 to 100 Pa·sec at a shearing rate of 1000 sec⁻¹ and a flow temperature of +40°C, obtained by compounding 10 to 100 parts by weight of an inorganic filler in the form of fiber and 10 to 100 parts by weight of an inorganic filler in the form of plate based on 100 parts by weight of a liquid crystal polyester resin, wherein the liquid crystal polyester resin has a flow temperature of 270°C to 400°C, the inorganic filler in the form of fiber has an average fiber diameter of 0.1 to 10 µm and a number-average fiber length of 1 to 100 µm, the inorganic filler in the form of plate has an average particle size of 5 to 20 µm, and the ratio (F/P) of the compounding amount (F) of the inorganic filler in the form of fiber to the compounding amount (P) of the inorganic filler in the form of plate satisfies a certain equation.

Patent Document 7 is directed to a particular composition which is produced by compounding (A) 100 parts by weight of a specific copolymerized polyester with (B) 5-200 parts by weight of talc having an average particle diameter of 2.5-3.5 µm and containing less than 1 wt.% of Fe₂O₃ and Al₂O₃ in total.

Patent Document 8 relates to a specific liquid crystal polyester composition made by blending a platy filler having a volume-average particle size of 14 µm or more and a fibrous filler with a liquid crystal polyester.

Patent Document 9 discloses a particular liquid crystal polyester composition which contains relative to 100 parts by mass of a liquid crystal polyester: 0.01-5 parts by mass of titanium oxide and/or a composite metal oxide containing titanium oxide as a principal component, and including one or more metal elements selected from among antimony, nickel, chromium, iron, zinc, molybdenum and tungsten; and 0.01-3 parts by mass of ultramarine blue.

Patent Document 10 relates to a liquid crystalline polymer molded article comprising an opening portion obtained by subjecting a liquid crystalline polymer composition containing a spherical filler to injection molding, wherein the liquid crystalline polymer molded article includes a weld portion, formed by injection molding, which extends toward the outside from the opening portion, and the weld portion has a thickness in the opening portion of 2.5 mm or less, and also has a length, along a surface of the molding, of at least two times the thickness.

Patent Document 11 concerns a particular method for producing a liquid crystal polymer molding comprising a weld portion by injection-molding a liquid crystal polymer composition containing a spherical filler, wherein the spherical filler has a center particle diameter of 60 µm or less.

Patent Document 12 is directed to a liquid crystal polyester composition comprising: a liquid crystal polyester in an amount of 100 parts by mass as well as a fibrous filler and a plate-like filler in an amount of not less than 65 parts by mass and not more than 100 parts by mass in total, wherein the fibrous filler has a number average fiber diameter of not less than 5 µm and not more than 15 µm, and a number average fiber length of more than 200 µm and less than 400 µm, the mass ratio of the fibrous filler to the plate-like filler is not less than 3 and not more than 15, and the flow starting temperature is not lower than 250°C and lower than 314°C.

Patent Document 13 relates to copolyesters consisting essentially of specific units (I), (II), (III) and (IV), and blends of these polymers and articles made from both, wherein units (I), (II), (III), and (IV) are present in particular proportions.

### PRIOR ART LITERATURE

### Patent Documents

Patent Document 1 : JP H04-248868 A
Patent Document 2 : JP H03-265650 A
Patent Document 3 : US 6,093,765 A
Patent Document 4 : JP 2005-537379 A
Patent Document 5 : JP S60-124649 A
Patent Document 6 : JP 2002-294038 A
Patent Document 7 : JP H04-202557 A
Patent Document 8 : JP 2012-107221 A
Patent Document 9 : JP 2013-203997 A
Patent Document 10 : JP 2012-206435 A
Patent Document 11 : JP 2012-206436 A
Patent Document 12 : JP 2013-194165 A
Patent Document 13 : JP H03-502818 A

### DISCLOSURE OF INVENTION

### Problems to be Solved by the Invention

In the production of ovenware, injection molding is sometimes used for reasons including the simplicity of the molding process, the fact that complex shapes can be formed, and an improvement in the selection of design aesthetics. On the other hand, recently there exists a growing need for larger ovenware.

However, when large ovenware is produced by injection molding, flow marks tend to occur more readily or be more prominent compared with the case where smaller ovenware is produced by injection molding, and therefore inferior external appearance can be a problem.

The present invention has been developed in light of the above circumstances, and has objects of providing large ovenware with excellent external appearance.

### Means for Solving the Problems

In other words, the present invention is as defined in the claims.

### Effects of the Invention

By using the present invention, large ovenware with excellent external appearance, and a resin composition for molding ovenware that can be used favorably in such ovenware can be provided.

### BRIEF DESCRIPTION OF THE DRAWINGS

FIG. 1 is a cross-sectional view of one example of ovenware of the present invention.
FIG. 2 is a perspective view illustrating the overall shape of one example of ovenware of the present invention.

### EMBODIMENTS FOR CARRYING OUT THE PRESENT INVENTION

### <<Ovenware>>

Ovenware of the present invention is described below.

The ovenware of the present invention is molded from a resin composition comprising a liquid crystal polyester resin and a talc filler, as specified in claim 1

The ovenware of the present invention is large ovenware that can be used for cooking food for multiple people.

In other words, the ovenware of the present invention has a capacity of at least 500 mL but not more than 6 L. In the present invention, the "ovenware capacity" means the maximum volume of water that can be placed in the ovenware at an air temperature of 25°C.

In the present invention, the capacity of the ovenware is preferably at least 1 L but not more than 6 L, and more preferably at least 2 L but not more than 6 L.

The ovenware is a heating container for cooking for use in an oven range, and all manner of variations in the size and shape are possible depending on the cooking application.

In the case of large ovenware, deformation during high-temperature use, or cracking upon dropping due to insufficient strength can sometimes occur. Further, large molded articles sometimes suffer from flow marks and unsatisfactory external appearance when resin compositions are used. In the case of smaller ovenware, these problems are less likely to occur, but these problems become more prominent in the case of large ovenware.

The upper limit for the size of the ovenware of the present invention is 6 L, and this is the maximum size that can be used in a typical household oven. Although the ovenware of the present invention is large, because the ovenware is molded from a prescribed resin composition, flow marks do not occur, meaning the external appearance is favorable, and satisfactory strength can also be achieved.

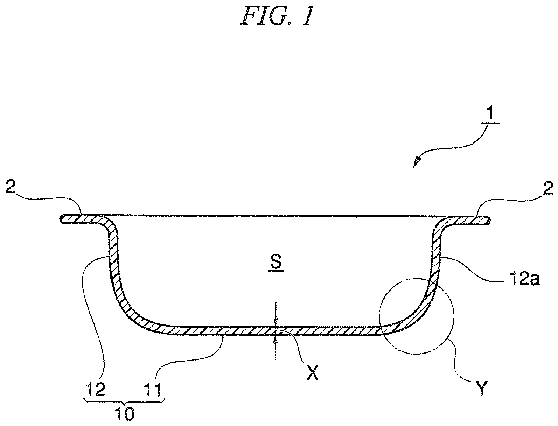

A cross-sectional view of the ovenware according to one embodiment of the present invention is illustrated in FIG. 1. As illustrated in FIG. 1, the ovenware of the present invention has a handle portion 2 and a container portion 10.

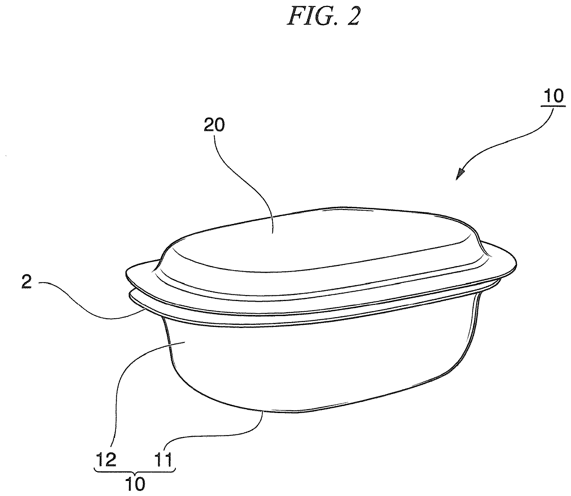

Further, as illustrated in FIG. 2, the ovenware of the present invention may also have a removable lid portion 20. The container portion 10 has a space S for holding the food or the like that represents the item to be cooked when the ovenware is used. The container portion 10 has a bottom portion 11 and a side wall 12 that is provided around the periphery of the bottom portion 11 and has a closed circular shape when viewed in plan view. The space S is a space surrounded by the bottom portion 11 and the side wall 12. The container portion 10 is preferably a wide-mouth container in which the entire area vertically above the horizontal surface of the bottom portion 11 is open. The "horizontal surface of the bottom portion" means the portion of the inner surface of the bottom portion (namely, the interface with the space S) that is substantially horizontal when the ovenware of the present invention composed of the container portion and the handle portion is placed on a horizontal surface. Here, "substantially horizontal" means having a gradient within a range from -5% to +5% relative to the horizontal plane.

In the ovenware 1 of the present invention, the "capacity" means the maximum volume of water that can be placed in the space S at an air temperature of 25°C.

The handle portion 2 may be provided as a portion of the container portion 10, or may be provided on the periphery of the container portion 10.

The handle portion 2 is mainly a structure for grasping when the user carries the ovenware 1. The handle portion 2 is provided on the outer wall 12a at the upper portion (namely, opposite the bottom portion 11) of the side wall 12, so as to protrude from the outer wall 12a in the opposite direction from the space S when viewed in plan view.

In the present invention, the height of the ovenware composed of the container portion and the handle portion is preferably at least 1 cm but not more than 30 cm, and more preferably at least 3 cm but not more than 20 cm.

In the present invention, the width of the ovenware composed of the container portion and the handle portion is preferably at least 5 cm but not more than 50 cm, and more preferably at least 10 cm but not more than 40 cm.

In the present invention, the depth of the ovenware composed of the container portion and the handle portion is preferably at least 5 cm but not more than 50 cm, and more preferably at least 10 cm but not more than 40 cm.

In those cases where the ovenware of the present invention also has the lid portion 20, the height, width and depth when the lid portion 20 is placed on top of the container portion 10 preferably satisfy the above ranges. Here, the "height of the ovenware composed of the container portion and the handle portion" means the shortest distance, when the ovenware of the present invention composed of the container portion and the handle portion is placed on a horizontal surface, from the upper surface of the horizontal surface to the uppermost portion of the ovenware composed of the container portion and the handle portion.

The "width of the ovenware composed of the container portion and the handle portion" means the maximum length of the ovenware in the horizontal direction when the ovenware of the present invention composed of the container portion and the handle portion is placed on a horizontal surface.

The "depth of the ovenware composed of the container portion and the handle portion" means the maximum length of the ovenware in a horizontal direction orthogonal to the direction of the aforementioned width, when the ovenware of the present invention composed of the container portion and the handle portion is placed on a horizontal surface.

In the present invention, the wall thickness of the container portion of the ovenware is at least 0.3 mm but not more than 5 mm, and is preferably at least 1 mm but not more than 4 mm. The "wall thickness of the container portion of the ovenware" means the thickness indicated by X in FIG. 1, and means the thinnest thickness at the measurement location.

In another aspect, the "wall thickness of the container portion of the ovenware" means the shortest distance, at an arbitrary location of the container portion of the ovenware, between the surface that contacts the space that holds the food or the like (namely, the inner wall of the ovenware), and the surface on the opposite side to the surface that contacts the space (namely, the outer wall of the ovenware).

The wall thickness of the container portion of the ovenware can be measured, for example, using calipers.

There are no particular limitations on the shape of the ovenware of the present invention, and any shape may be selected as appropriate, including a rectangular prism, a cube, an oval shape, or a shape in which the boundary between the bottom portion and the side wall is curved, as illustrated by Y in FIG. 1.

Among these, an oval shape, or a shape in which the boundary between the bottom portion and the side wall is curved in the manner illustrated by Y in FIG. 1 is preferable, because the inner walls of the ovenware are easier to clean, and the ovenware has more favorable strength due to the lack of corners on the outer wall.

During use, when the ovenware having the food or the like that represents the item being cooked in the container portion 10 is removed from the oven during use, there is a possibility that the handle portion 2 may deform due to the weight of the food and the like. Accordingly, from the viewpoint of improving the strength, the thickness of the handle portion 2 of the ovenware may be made thicker than the thickness of the container portion 10. The thickness of the handle portion of the ovenware can be measured, for example, using calipers.

In those cases where the ovenware of the present invention has the lid portion 20, there are no particular limitations on the shape of the lid portion 20, but a shape that can be placed on top of the handle portion 2 in a removable manner is preferable.

### (Resin Composition)

The ovenware of the present invention is molded from a resin composition comprising a liquid crystal polyester resin and a talc filler. In other words, the ovenware of the present invention is a molded body of a resin composition comprising a liquid crystal polyester resin and a talc filler, wherein an average particle size of the talc filler is at least 10 um but more than 25 µm.

### (Liquid Crystal Polyester Resin)

The liquid crystal polyester resin of the ovenware of the present invention (hereinafter sometimes referred to as "the liquid crystal polyester") is a resin having a repeating unit derived from a hydroxycarboxylic acid as a mesogenic group. Here, a "hydroxycarboxylic acid" means a compound having both a hydroxyl group (-OH) and a carboxyl group (-C(=O)-OH) within a single molecule.

Here, "derived" means a change in the chemical structure due to polymerization.

The liquid crystal polyester is a liquid crystal polyester that exhibits liquid crystallinity in a melted state, and preferably melts at a temperature of at least 250°C but not more than 450°C. The liquid crystal polyester is preferably a fully aromatic liquid crystal polyester formed using only aromatic compounds as raw material monomers.

Examples of the liquid crystal polyester include liquid crystal polyesters obtained by polymerizing (namely, polycondensing) an aromatic hydroxycarboxylic acid, an aromatic dicarboxylic acid, and at least one compound selected from the group consisting of aromatic diols, aromatic hydroxylamines and aromatic diamines, liquid crystal polyesters obtained by polymerizing a plurality of aromatic hydroxycarboxylic acids, and liquid crystal polyesters obtained by polymerizing a polyester such as polyethylene terephthalate and an aromatic hydroxycarboxylic acid.

Here, each of the aromatic hydroxycarboxylic acid, the aromatic dicarboxylic acid, the aromatic diol, the aromatic hydroxylamine and the aromatic diamine may, independently, be partially or totally replaced with a polymerizable derivative thereof.

Examples of polymerizable derivatives of compounds having a carboxyl group, such as the aromatic hydroxycarboxylic acid and the aromatic dicarboxylic acid, include derivatives (also known as esters) in which the carboxyl group is substituted with an alkoxycarbonyl group or an aryloxycarbonyl group, derivatives (also known as acid halides) in which the carboxyl group is substituted with a haloformyl group, and derivatives (also known as acid anhydrides) in which the carboxyl groups are substituted with an acyloxycarbonyl group.

Examples of polymerizable derivatives of compounds having a hydroxyl group, such as the aromatic hydroxycarboxylic acid, the aromatic diol and the aromatic hydroxylamine, include derivatives (also known as acylated compounds) in which the hydroxyl group is acylated and substituted with an acyloxyl group.

Examples of polymerizable derivatives of compounds having an amino group, such as the aromatic hydroxylamine and the aromatic diamine, include derivatives (also known as acylated compounds) in which the amino group is acylated and substituted with an acylamino group.

The liquid crystal polyester preferably has at least one repeating unit represented by general formula (1) shown below (hereinafter sometimes referred to as "the repeating unit (1)"). The repeating unit (1) corresponds with the aforementioned mesogenic group.

(1) -O-Ar¹-CO-

(ln the formula, Ar¹ represents a phenylene group, naphthylene group or biphenylylene group, and at least one hydrogen atom in the group represented by Ar¹ may, independently, be substituted with a halogen atom, an alkyl group or an aryl group.)

Examples of the halogen atom that may substitute at least one hydrogen atom in the group represented by Ar¹ include a fluorine atom, chlorine atom, bromine atom and iodine atom.

The alkyl group that may substitute at least one hydrogen atom in the group represented by Ar¹ is preferably an alkyl group having a carbon number of 1 to 10, and examples include a methyl group, ethyl group, n-propyl group, isopropyl group, n-butyl group, isobutyl group, sec-butyl group, tert-butyl group, n-hexyl group, n-heptyl group, 2-ethylhexyl group, n-octyl group, n-nonyl group and n-decyl group.

The aryl group that may substitute at least one hydrogen atom in the group represented by Ar¹ is preferably an aryl group having a carbon number of 6 to 20, and examples include monocyclic aromatic groups such as a phenyl group, o-tolyl group, m-tolyl group and p-tolyl group, and condensed ring aromatic groups such as a 1-naphthyl group and 2-naphthyl group.

In those cases where at least one hydrogen atom in the group represented by Ar¹ is substituted by one of these groups, the number of substitutions is preferably one or two, and is more preferably one.

The repeating unit (1) is a repeating unit derived from an aromatic hydroxycarboxylic acid.

The repeating unit (1) is preferably a repeating unit in which Ar¹ is a 1,4-phenylene group (for example, a repeating unit derived from 4-hydroxybenzoic acid) or a repeating unit in which Ar¹ is a 2,6-naphthylene group (for example, a repeating unit derived from 6-hydroxy-2-naphthoic acid).

In other words, the liquid crystal polyester described above is preferably a liquid crystal polyester having at least one repeating unit among a repeating unit derived from 4-hydroxybenzoic acid (also known as para-hydroxybenzoic acid) and a repeating unit derived from 6-hydroxy-2-naphthoic acid, and is more preferably a liquid crystal polyester having a repeating unit derived from 4-hydroxybenzoic acid.

In another aspect, the liquid crystal polyester is preferably a liquid crystal polyester having at least one repeating unit represented by general formula (2) shown below (hereinafter sometimes referred to as "the repeating unit (2)"), and at least one repeating unit represented by general formula (3) shown below (hereinafter sometimes referred to as "the repeating unit (3)"), and is more preferably a liquid crystal polyester having the repeating unit (1), the repeating unit (2) and the repeating unit (3). In this liquid crystal polyester, the repeating unit (2) and the repeating unit (3) may each include a plurality of different repeating units. The repeating unit (1) preferably has at least one of a repeating unit in which Ar¹ is a 1,4-phenylene group and a repeating unit in which Ar¹ is a 2,6-naphthylene group.

(2) -CO-Ar²-CO-

(3) -X-Ar³-Y-

(In the formulas, each of Ar² and Ar³ independently represents a phenylene group, naphthylene group, biphenylylene group or a group represented by general formula (4) shown below, each of X and Y independently represents an oxygen atom or an imino group (-NH-), and at least one hydrogen atom in the group represented by Ar² or Ar³ may, independently, be substituted with a halogen atom, an alkyl group or an aryl group.)

(4) -Ar⁴-Z-Ar⁵-

(In the formula, each of Ar⁴ and Ar⁵ independently represents a phenylene group or a naphthylene group, and Z represents an oxygen atom, sulfur atom, carbonyl group, sulfonyl group or alkylidene group.)

Examples of the halogen atom, alkyl group and aryl group that may substitute at least one hydrogen atom in the group represented by Ar² or Ar³ include the same atoms and groups as those described above for the halogen atom, alkyl group and aryl group that may substitute at least one hydrogen atom in the group represented by Ar¹.

In those cases where at least one hydrogen atom in the group represented by Ar² or Ar³ is substituted by one of these groups, the number of substitutions for each group represented by Ar² or Ar³ is, independently, preferably one or two, and is more preferably one.

The alkylidene group represented by Z is preferably an alkylidene group having a carbon number of 1 to 10, and examples include a methylene group, ethylidene group, isopropylidene group, n-butylidene group and 2-ethylhexylidene group.

The repeating unit (2) is a repeating unit derived from an aromatic dicarboxylic acid. Examples of the repeating unit (2) include repeating units in which Ar² is a 1,4-phenylene group (for example, a repeating unit derived from terephthalic acid), repeating units in which Ar² is a 1,3-phenylene group (for example, a repeating unit derived from isophthalic acid), repeating units in which Ar² is a 2,6-naphthylene group (for example, a repeating unit derived from 2,6-naphthalenedicarboxylic acid), repeating units in which Ar² is a 4,4'-biphenylylene group (for example, a repeating unit derived from 4,4'-dicarboxybiphenyl), and repeating units in which Ar² is a diphenyl ether-4,4'-diyl group (for example, a repeating unit derived from 4,4'-dicarboxydiphenyl ether). Examples of preferred repeating units (2) include repeating units in which Ar² is a 1,4-phenylene group, 1,3-phenylene group, 2,6-naphthylene group or 4,4'-biphenylylene group. The liquid crystal polyester may include at least one of the above repeating units as the repeating unit (2).

The liquid crystal polyester preferably has, as the repeating unit (2), at least one repeating unit among a repeating unit in which Ar² is a 1,4-phenylene group and a repeating unit in which Ar² is a 1,3-phenylene group, and more preferably has a repeating unit in which Ar² is a 1,4-phenylene group.

The repeating unit (3) is a repeating unit derived from at least one compound selected from the group consisting of aromatic diols, aromatic hydroxylamines and aromatic diamines.

Examples of the repeating unit (3) include repeating units in which Ar³ is a 1,4-phenylene group (for example, a repeating unit derived from hydroquinone, a repeating unit derived from a p-aminophenol such as 4-acetoxyaminophenol, or a repeating unit derived from p-phenylenediamine), repeating units in which Ar³ is a 1,3-phenylene group (for example, a repeating unit derived from 1,3-benzenediol, a repeating unit derived from m-aminophenol, or a repeating unit derived from m-phenylenediamine), repeating units in which Ar³ is a 2,6-naphthylene group (for example, a repeating unit derived from 2,6-dihydroxynaphthalene, a repeating unit derived from 2-hydroxy-6-aminonaphthalene, or a repeating unit derived from 2,6-diaminonaphthalene), repeating units in which Ar³ is a 4,4'-biphenylylene group (for example, a repeating unit derived from 4,4'-dihydroxybiphenyl, a repeating unit derived from 4-amino-4'-hydroxybiphenyl, or a repeating unit derived from a 4,4'-diaminobiphenyl), and repeating units in which Ar³ is a diphenyl ether-4,4'-diyl group (for example, a repeating unit derived from 4,4'-dihydroxydiphenyl ether, a repeating unit derived from 4-hydroxy-4'-aminodiphenyl ether, or a repeating unit derived from 4,4'-diaminodiphenyl ether). Examples of preferred repeating units (3) include repeating units in which Ar³ is a 1,4-phenylene group, 1,3-phenylene group, 2,6-naphthylene group or 4,4'-biphenylylene group. The liquid crystal polyester may include at least one of the above repeating units as the repeating unit (3).

The liquid crystal polyester is preferably a liquid crystal polyester having, as the repeating unit (3), at least one repeating unit among a repeating unit in which Ar³ is a 1,4-phenylene group and a repeating unit in which Ar³ is a 4,4'-biphenylylene group, and is more preferably a liquid crystal polyester having a repeating unit in which Ar³ is a 4,4'-biphenylylene group.

The liquid crystal polyester preferably has, as the repeating unit (3), a repeating unit in which X and Y are both oxygen atoms, namely a repeating unit derived from a prescribed aromatic diol, and more preferably has only repeating units in which X and Y are both oxygen atoms as the repeating unit (3).

In other words, one aspect of the above liquid crystal polyester is preferably a liquid crystal polyester having a repeating unit represented by general formula (21) shown below (hereinafter sometimes referred to as "the repeating unit (21)") and a repeating unit represented by general formula (31) shown below (hereinafter sometimes referred to as "the repeating unit (31)"), and a liquid crystal polyester having the repeating unit (1), the repeating unit (21) and the repeating unit (31) is even more desirable. Here, the repeating unit (1) is preferably at least one repeating unit among a repeating unit in which Ar¹ is a 1,4-phenylene group and a repeating unit in which Ar¹ is a 2,6-naphthylene group.

(21) -CO-Ar²¹-CO-

(31) -O-Ar³¹-O-

(In the formulas, each of Ar²¹ and Ar³¹ independently represents a 1,4-phenylene group, 1,3-phenylene group, 2,6-naphthylene group or 4,4'-biphenylylene group, and at least one hydrogen atom in the group represented by Ar²¹ or Ar³¹ may, independently, be substituted with a halogen atom, an alkyl group or an aryl group.)

The amount of the repeating unit (1), relative to the total amount of all the repeating units that constitute the liquid crystal polyester used in the present invention, is preferably at least 30 mol%, more preferably at least 40 mol% but not more than 80 mol%, even more preferably at least 50 mol% but not more than 70 mol%, and most preferably at least 55 mol% but not more than 70 mol%. In those cases where the repeating unit (1) is derived from two or more compounds, the amount of all of the repeating units (1) satisfies the above range.

In another aspect, in the liquid crystal polyester, when the total amount of the repeating unit (1), the repeating unit (2) and the repeating unit (3) is deemed to be 100 mol%, the amount of the repeating unit (1) is preferably at least 30 mol%, more preferably at least 40 mol% but not more than 80 mol%, even more preferably at least 50 mol% but not more than 70 mol%, and most preferably at least 55 mol% but not more than 70 mol%.

The repeating unit (1) preferably has at least a repeating unit derived from para-hydroxybenzoic acid. In other words, the repeating unit (1) may be a repeating unit derived from para-hydroxybenzoic acid, or one of a plurality of repeating units (1) may be a repeating unit derived from para-hydroxybenzoic acid. In either case, the amount of the repeating unit derived from para-hydroxybenzoic acid, relative to the total amount of all the repeating units that constitute the liquid crystal polyester used in the present invention, is preferably at least 40 mol%, more preferably at least 45 mol% but not more than 80 mol%, even more preferably at least 50 mol% but not more than 70 mol%, and most preferably at least 55 mol% but not more than 65 mol%.

It is more preferable that, when the total amount of the repeating unit (1), the repeating unit (2) and the repeating unit (3) is deemed to be 100 mol%, the amount of the repeating unit derived from para-hydroxybenzoic acid is preferably at least 40 mol%, more preferably at least 45 mol% but not more than 80 mol%, even more preferably at least 50 mol% but not more than 70 mol%, and most preferably at least 55 mol% but not more than 70 mol%.

If the amount of the repeating unit (1) exceeds 80 mol%, then the processing temperature becomes too high, which can cause external appearance defects, and therefore the amount is preferably not more than 80 mol%.

The amount of the repeating unit (2), relative to the total amount of all the repeating units that constitute the liquid crystal polyester used in the present invention, is preferably not more than 35 mol%, more preferably at least 10 mol% but not more than 35 mol%, even more preferably at least 15 mol% but not more than 30 mol%, and most preferably at least 17.5 mol% but not more than 27.5 mol%. In those cases where the repeating unit (2) is derived from two or more compounds, the amount of all of the repeating units (2) satisfies the above range.

In another aspect, when the total amount of the repeating unit (1), the repeating unit (2) and the repeating unit (3) is deemed to be 100 mol%, the amount of the repeating unit (2) in the liquid crystal polyester is preferably not more than 35 mol%, more preferably at least 10 mol% but not more than 35 mol%, even more preferably at least 15 mol% but not more than 30 mol%, and most preferably at least 17.5 mol% but not more than 27.5 mol%.

The repeating unit (2) preferably has at least a repeating unit derived from terephthalic acid. In other words, the repeating unit (2) may be a repeating unit derived from terephthalic acid, or one of a plurality of repeating units (2) may be a repeating unit derived from terephthalic acid. In either case, the amount of the repeating unit derived from terephthalic acid, relative to the total amount of all the repeating units that constitute the liquid crystal polyester used in the present invention, is preferably not more than 35 mol%, more preferably at least 10 mol% but not more than 35 mol%, even more preferably at least 10 mol% but not more than 20 mol%, and most preferably at least 11 mol% but not more than 18 mol%.

It is more preferable that, when the total amount of the repeating unit (1), the repeating unit (2) and the repeating unit (3) is deemed to be 100 mol%, the amount of the repeating unit derived from terephthalic acid is preferably not more than 35 mol%, more preferably at least 10 mol% but not more than 35 mol%, even more preferably at least 10 mol% but not more than 20 mol%, and most preferably at least 11 mol% but not more than 18 mol%.

Provided the amount of the repeating unit (2) is at least 10 mol%, satisfactory heat resistance can be imparted to the molded ovenware, and the strength during use in an oven can be enhanced.

The amount of the repeating unit (3), relative to the total amount of all the repeating units that constitute the liquid crystal polyester used in the present invention, is preferably not more than 35 mol%, more preferably at least 10 mol% but not more than 35 mol%, even more preferably at least 15 mol% but not more than 30 mol%, and most preferably at least 17.5 mol% but not more than 27.5 mol%. In those cases where the repeating unit (3) is derived from two or more compounds, the amount of all of the repeating units (3) satisfies the above range.

In another aspect, when the total amount of the repeating unit (1), the repeating unit (2) and the repeating unit (3) is deemed to be 100 mol%, the amount of the repeating unit (3) in the liquid crystal polyester is preferably not more than 35 mol%, more preferably at least 10 mol% but not more than 35 mol%, even more preferably at least 15 mol% but not more than 30 mol%, even more preferably at least 17 mol% but not more than 30 mol%, and most preferably at least 17.5 mol% but not more than 27.5 mol%.

The repeating unit (3) preferably has at least a repeating unit derived from 4,4'-dihydroxybiphenyl. In other words, the repeating unit (3) may be a repeating unit derived from 4,4'-dihydroxybiphenyl, or one of a plurality of repeating units (3) may be a repeating unit derived from 4,4'-dihydroxybiphenyl. In either case, the amount of the repeating unit derived from 4,4'-dihydroxybiphenyl, relative to the total amount of all the repeating units that constitute the liquid crystal polyester used in the present invention, is preferably not more than 35 mol%, more preferably at least 10 mol% but not more than 35 mol%, even more preferably at least 11 mol% but not more than 30 mol%, even more preferably at least 11.5 mol% but not more than 25 mol%, and most preferably at least 12 mol% but not more than 21 mol%.

It is more preferable that, when the total amount of the repeating unit (1), the repeating unit (2) and the repeating unit (3) is deemed to be 100 mol%, the amount of the repeating unit derived from 4,4'-dihydroxybiphenyl is preferably not more than 35 mol%, more preferably at least 10 mol% but not more than 35 mol%, even more preferably at least 11 mol% but not more than 30 mol%, even more preferably at least 11.5 mol% but not more than 25 mol%, and most preferably at least 12 mol% but not more than 21 mol%.

In the liquid crystal polyester, each of the repeating units (1) to (3) may, independently, include at least two types of repeating units. Further, the liquid crystal polyester may also include a repeating unit other than the repeating units (1) to (3), and the amount of the other repeating unit, relative to the total amount of all the repeating units, is preferably at least 0 mol% but not more than 10 mol%, and more preferably at least 0 mol% but not more than 5 mol%.

The liquid crystal polyester is preferably produced by subjecting the raw material monomers corresponding with the repeating units that constitute the liquid crystal polyester to melt polymerization, and then subjecting the obtained product (prepolymer) to solid phase polymerization. This method enables a high-molecular weight liquid crystal polyester having superior heat resistance, strength and rigidity to be produced with good operability. The melt polymerization may be performed in the presence of a catalyst. Examples of the catalyst include metal compounds such as magnesium acetate, stannous acetate, tetrabutyl titanate, lead acetate, sodium acetate, potassium acetate and antimony trioxide, and nitrogen-containing heterocyclic compounds such as N,N-dimethylaminopyridine and N-methylimidazole.

The flow beginning temperature of the liquid crystal polyester is preferably at least 270°C, more preferably at least 270°C but not more than 400°C, and even more preferably at least 280°C but not more than 380°C. The higher the flow beginning temperature of the liquid crystal polyester, the more easily the heat resistance and the strength and rigidity can be improved, but if the flow beginning temperature is too high (namely, higher than the above upper limit), then a very high temperature is required to melt the polyester, thermal degradation during molding becomes more likely, and the viscosity upon melting tends to increase, causing a deterioration in fluidity. In other words, provided the flow beginning temperature of the liquid crystal polyester satisfies the above range, the heat resistance and the strength and rigidity can be improved easily, but a very high temperature is not required to melt the polyester, meaning thermal degradation during molding is unlikely, and the viscosity is not overly high upon melting, meaning the fluidity is less likely to deteriorate.

The "flow beginning temperature" is also called the flow temperature or the fluidization temperature, and is the temperature that yields a viscosity of 4,800 Pa s (48,000 poise) when the liquid crystalline polyester is melted by heating at a rate of temperature increase of 4°C/minute under a load of 9.8 MPa (100 kg/cm²) using a capillary rheometer, and extruded from a nozzle having an inner diameter of 1 mm and a length of 10 mm, and is a temperature that acts as a measure of the molecular weight of the liquid crystal polyester (see Naoyuki Koide (ed.), "Liquid Crystal Polymers - Synthesis, Molding, Applications -", CMC Publishing Co., Ltd., June 5, 1987, p. 95).

The amount of the liquid crystal polyester, relative to the total mass of the resin composition, is preferably from 40 to 70% by mass. The amount of the liquid crystal polyester, relative to the total mass of the resin composition, is more preferably at least 43% by mass, even more preferably 45% by mass, and most preferably at least 50% by mass. Further, the amount of the liquid crystal polyester, relative to the total mass of the resin composition, is preferably not more than 65% by mass, and more preferably 63% by mass.

### (Talc Filler)

The talc filler of the ovenware of the present invention is preferably a material obtained by crushing hydrated magnesium silicate. The crystal structure of hydrated magnesium silicate is a pyrophyllite-type three-layer structure, and the talc filler is a substance in which this structure stacked in layers. The talc is preferably a flat talc prepared by finely crushing the molecular crystals of hydrated magnesium silicate down to substantially the unit layer level.

The average particle size of the talc filler is
at least 10 µm but not more than 25 µm. Provided the average particle size is at least as large as the above lower limit, flow marks are unlikely to occur in the ovenware, and a favorable external appearance can be achieved. Provided the average particle size is not more than the above upper limit, particles of the talc filler are less likely to be visible at the surface of the ovenware, enabling a favorable external appearance to be obtained. If the average particle size of the talc filler is too small, then the external appearance tends to deteriorate due to foaming and the like at the surface of the molded body, and the heat resistance of the molded body may sometimes deteriorate. Further, if the average particle size of the talc filler is larger than 30 µm, then the talc appears as white spots on the surface of the molded body and the external appearance tends to deteriorate, and therefore the average particle size is preferably not more than 30 µm. Furthermore, in the present application, the average particle size of the talc filler is at least 10 µm but not more than 25 µm.

The "average particle size of the talc filler" can be obtained using the following measurement method.

First, 0.1 g of the talc filler powder is placed in 50 ml of a 0.2% by mass aqueous solution of sodium hexametaphosphate, and a dispersion containing the dispersed powder is obtained.

Next, the particle size distribution of the obtained dispersion is measured using a Mastersizer 2000 manufactured by Malvern Instruments Ltd. (a laser diffraction and scattering particle size distribution analyzer), and a volume-based cumulative particle size distribution curve is obtained. In the obtained volume-based cumulative particle size distribution curve, the value for the particle size at the 50% cumulative point from the small particle side of the distribution is deemed the 50% cumulative volume particle size D50, and this value is used as the average particle size of the talc filler.

The talc filler may be used in an untreated state, or the surface of the talc may be treated with any of various known surfactants to improve the interface adhesiveness with the liquid crystal polyester and the dispersibility within the liquid crystal polyester. Examples of the surfactant include silane coupling agents, titanium coupling agents, higher fatty acids, higher fatty acid esters, higher fatty acid amides, and higher fatty acid salts and the like.

In the present invention, the amount of the talc filler, per 100 parts by mass of the liquid crystal polyester resin, is preferably at least 55 parts by mass but not more than 100 parts by mass, more preferably at least 60 parts by mass but not more than 90 parts by mass, and even more preferably at least 60 parts by mass but not more than 80 parts by mass. If the amount of the talc filler exceeds 100 parts by mass, then the specific gravity of the resin composition increases, and the strength of the obtained ovenware tends to deteriorate.

### (Titanium Oxide Filler)

In the present invention, the resin composition preferably also comprises a titanium oxide filler. The titanium oxide filler may be any material containing titanium oxide as the main component, any may also contain unavoidable impurities. Materials available commercially as titanium oxide fillers for resin filling can be used without modification as the titanium oxide filler used in the present invention. The term "main component" means the material contains at least 90% of that component.

There are no particular limitations on the crystal form of the titanium oxide filler, and the rutile form, the anatase form, or a mixture of the two may be used. In the present invention, the use of a rutile titanium oxide filler, which has a larger refractive index than an anatase titanium oxide filler, is preferable.

Further, the titanium oxide filler may be subjected to a surface treatment.

For example, by performing a surface treatment using an inorganic metal oxide, properties such as the dispersibility can be improved. The use of aluminum oxide (namely, alumina) as the inorganic metal oxide is preferable.

In the present invention, provided aggregation or the like does not occur during the production process, and no handling problems arise, the use of a titanium oxide that has not undergone a surface treatment is preferable in terms of the heat resistance and strength.

There are no particular limitations on the average particle size of the titanium oxide filler, which may be selected as appropriate.

The average particle size of the titanium oxide filler is preferably from 0.10 to 1 µm, and more preferably from 0.15 to 0.25 µm.

In the present invention, the "average particle size of the titanium oxide filler" means the maximum dimension of a particle of the titanium oxide.

In those cases where the titanium oxide filler undergoes significant aggregation or the like in a solvent used for measuring the average particle size, the external appearance is first photographed using a scanning electron microscope (SEM). An image analyzer (for example, Luzex IIU manufactured by Nireco Corporation) is then used to analyze the SEM photograph, and plot the proportion of particles (%) having a primary particle size in each of a series of particle size intervals, thus obtaining a distribution curve. By determining the cumulative 50% value from this distribution curve, the volume average particle size (average particle size of the titanium oxide filler) can be obtained. On the other hand, in those cases where the titanium oxide filler does not undergo significant aggregation or the like in a solvent used for measuring the average particle size, laser diffraction or the like can be used to determine the average particle size of the titanium oxide filler.

The amount of the titanium oxide filler, per 100 parts by mass of the liquid crystal polyester resin, is preferably at least 1 part by mass but not more than 20 parts by mass, more preferably at least 1 part by mass but not more than 15 parts by mass, and even more preferably at least 2 parts by mass but not more than 13 parts by mass. In those cases where a mixture of a plurality of fillers is used as the titanium oxide, the total amount of the mixture preferably satisfies the above range.

By ensuring the amount satisfies the above range, the external appearance of the surface of the ovenware is favorable.

### (Pigment)

The resin composition according to the ovenware of the present invention preferably comprises a pigment. The pigment included in the resin composition may be selected as appropriate in accordance with the design aesthetics of the ovenware, and examples of the pigment include inorganic fillers such as alumina, iron oxide, cobalt oxide, chromium oxide, manganese oxide, ultramarine, composite oxides (for example, Pigment Yellow 53, Pigment Red 233, Pigment Blue 35, Pigment Green 50 and Pigment Brown 31) and carbon black. Among these, the present invention preferably comprises an inorganic filler as the pigment, and more preferably comprises a carbon black. The titanium oxide filler and talc filler described above are deemed to be not included in the pigment of the present invention. A single pigment may be used alone, or two or more pigments may be used simultaneously.

In the present invention, the blend amount of the pigment, per 100 parts by mass of the liquid crystal polyester resin, is preferably at least 1 part by mass but not more than 10 parts by mass, more preferably at least 1 part by mass but not more than 5 parts by mass, and even more preferably at least 2 parts by mass but not more than 3 parts by mass. In those cases where two or more pigments are used simultaneously, the total amount of all the pigments preferably satisfies the above range.

Further, when a carbon black is used as the pigment, the blend amount of the carbon black, per 100 parts by mass of the liquid crystal polyester resin, is preferably at least 1 part by mass but not more than 10 parts by mass, more preferably at least 1 part by mass but not more than 5 parts by mass, and even more preferably at least 2 parts by mass but not more than 3 parts by mass. Although there are no limitations on the carbon black used, the use of a carbon black that conforms to 21 CFR 178.3297 of the U.S.A. FDA is preferable. Examples of carbon blacks that conform to 21 CFR 178.3297 of the U.S.A. FDA include BLACK PEARLS 4350 and BLACK PEARLS 4750 manufactured by Cabot Corporation, and PRINTEX F80 and PRINTEX F85 manufactured by Orion Engineered Carbons S.A.

Provided they do not impair the objects of the present invention, typical fillers such as release agents (for example, montanoic acid and salts, esters and half-esters thereof, stearyl alcohol, stearamide, and polyethylene wax and the like), antioxidants and heat stabilizers (for example, hindered phenols, hydroquinone, phosphites, and derivatives of these compounds), ultraviolet stabilizers (for example, resorcinol, salicylates, benzotriazole, and benzophenone and the like), plasticizers, flame retardants, flame retardant assistants, antistatic agents and surfactants, and other thermoplastic resins (such as fluororesins) may also be added to the liquid crystal resin composition
to impart the composition with specific properties.

By also adding a higher fatty acid metal salt to the liquid crystal resin
composition, the moldability of the composition can be improved. Here, a "higher fatty acid" means a fatty acid having a carbon number of 12 or greater, and preferably a fatty acid having a carbon number of 12 to 22, and specific examples include lauric acid, myristic acid, palmitic acid, stearic acid, oleic acid, and behenic acid. Furthermore, for the higher fatty acid metal salt used in the present invention, a salt having a melting point of 1 50°C or higher is preferable in terms of the moldability of the obtained liquid crystal resin composition, and a salt having a melting point of200°C or higher is more preferable. Specific examples of the higher fatty acid metal salt include calcium stearate, calcium laurate, calcium behenate, barium stearate, barium laurate, barium behenate, aluminum stearate, lithium stearate, lithium behenate, potassium stearate and sodium stearate, preferred examples include barium stearate, barium laurate, barium behenate, lithium stearate, lithium behenate, potassium stearate and sodium stearate, and particularly preferred examples include potassium stearate and calcium behenate. In the present invention, the melting point of the higher fatty acid can be measured by differential scanning calorimetry, by determining the endothermic peak temperature observed when measurement is conducted by raising the temperature from room temperature at a rate of 20°C/minute. The amount of the higher fatty acid metal salt, when the total amount of the liquid crystal polyester and the fillers is deemed to be 100 parts by mass, is typically not more than 1.0 parts by mass, more preferably not more than 0.5 parts by mass, and even more preferably 0.1 parts by mass or less.

In the present embodiment, in those cases where the resin composition comprises an aforementioned additive, the amount of the additive in the resin composition, when the total amount of the liquid crystal polyester and the fillers is deemed to be 100 parts by mass, is preferably greater than 0 parts by mass but not more than 5 parts by mass.

The ovenware of the present invention is injection molded ovenware.

The ovenware of the present invention can be used favorably even at high temperatures of 200°C or higher.

The ovenware of the present invention is preferably ovenware molded from a resin composition having a deflection temperature under load of at least 250°C but less than 270°C. In other words, the ovenware of the present invention is preferably a molded body of a resin composition having a deflection temperature under load of at least 250°C but less than 270°C. The deflection temperature under load can be measured using the method disclosed in the examples described below.

For ovenware used in an oven at a high temperature of 200°C or higher, as the size of the ovenware is increased, deformation during use at high temperature and susceptibility to breakage when the molded article is dropped tend to become issues.

By employing a resin composition having the deflection temperature under load prescribed above, the ovenware of the present invention is able to exhibit superior strength even in the case of large ovenware with a capacity of at least 500 mL but not more than 6 L.

### <<Resin Composition for Molding Ovenware>>

The ovenware can be molded from a resin composition for molding ovenware.

The description relating to the resin composition for molding ovenware
is the same as that for the resin composition described above as the resin composition used in molding the ovenware of the present invention.

A method for producing the resin composition for molding ovenware
includes blending and kneading the resin composition used for molding the ovenware of the present invention, the talc filler, the titanium oxide, and an optional pigment, in a prescribed blending ratio.

Another aspect of the ovenware of the present invention is ovenware having a container portion and a handle portion, wherein the ovenware is a molded body of a resin composition comprising a liquid crystal polyester resin and a talc filler, the amount of the talc filler is at least 55 parts by mass but not more than 100 parts by mass per 100 parts by mass of the liquid crystal polyester resin, the capacity of the ovenware is at least 500 mL but not more than 6 L, and the wall thickness of the container portion is at least 0.3 mm but not more than 5 mm. The average particle size of the talc filler is at least 10 µm but not more than 25 µm.

The amount of the talc filler is preferably at least 60 parts by mass but not more than 90 parts by mass, and more preferably at least 60 parts by mass but not more than 80 parts by mass, per 100 parts by mass of the liquid crystal polyester resin.

The liquid crystal polyester resin preferably has at least the repeating un described above, the repeating unit (2) described above, and the repeating unit (3) described above. Moreover, when the total amount of the repeating unit (1), the repeating unit (2) and the repeating unit (3) is deemed to be 100 mol%, the amount of the repeating unit (1) is preferably at least 30 mol%, more preferably at least 40 mol% but not more than 80 mol%, even more preferably at least 50 mol% but not more than 70 mol%, and most preferably at least 55 mol% but not more than 70 mol%, the amount of the repeating unit (2) is preferably not more than 35 mol%, more preferably at least 10 mol% but not more than 35 mol%, even more preferably at least 15 mol% but not more than 30 mol%, and most preferably at least 17.5 mol% but not more than 27.5 mol%, and the amount of the repeating unit (3) is preferably not more than 35 mol%, more preferably at least 10 mol% but not more than 35 mol%, even more preferably at least 15 mol% but not more than 30 mol%, and most preferably at least 17.5 mol% but not more than 27.5 mol%.

The repeating unit (1) is preferably at least one repeating unit selected from the group consisting of a repeating unit derived from para-hydroxybenzoic acid and a repeating unit derived from 6-hydroxy-2-naphthoic acid. The repeating unit (2) is preferably at least one repeating unit selected from the group consisting of a repeating unit derived from terephthalic acid and a repeating unit derived from isophthalic acid, and including both of these repeating units is more preferable. The repeating unit (3) is preferably at least one repeating unit selected from the group consisting of a repeating unit derived from 4,4'-dihydroxybiphenyl and a repeating unit derived from 4-acetoxyaminophenol, and including only one of these repeating units is more preferable, but both repeating units may be included.

The liquid crystal polyester resin is preferably a liquid crystal polyester resin in which the repeating unit (1) is a repeating unit derived from para-hydroxybenzoic acid and a repeating unit derived from 6-hydroxy-2-naphthoic acid, the repeating unit (2) is a repeating unit derived from terephthalic acid and a repeating unit derived from isophthalic acid, and the repeating unit (3) is a repeating unit derived from 4,4'-dihydroxybiphenyl, or a liquid crystal polyester resin in which the repeating unit (1) is a repeating unit derived from para-hydroxybenzoic acid, the repeating unit (2) is a repeating unit derived from terephthalic acid and a repeating unit derived from isophthalic acid, and the repeating unit (3) is a repeating unit derived from 4,4'-dihydroxybiphenyl and a repeating unit derived from 4-acetoxyaminophenol, or the like.

The ovenware described above is preferably molded from a resin composition having a deflection temperature under load of at least 250°C but less than 270°C. In other words, the ovenware described above is preferably a molded body of a resin composition having a deflection temperature under load of at least 250°C but less than 270°C.

Another aspect of the ovenware of the present invention is a molded body of a resin composition which, in addition to the liquid crystal polyester resin and the talc filler, comprises at least one material selected from the group consisting of a titanium oxide filler and a pigment.

Examples of the pigment include inorganic fillers such as alumina, iron oxide, cobalt oxide, chromium oxide, manganese oxide, ultramarine, composite oxides and carbon blacks, and an inorganic material is preferable, and a carbon black is more preferable.

In those cases where the ovenware comprises a titanium oxide filler, the amount of the titanium oxide filler, per 100 parts by mass of the liquid crystal polyester resin, is preferably at least 1 part by mass but not more than 20 parts by mass, more preferably at least 1 part by mass but not more than 15 parts by mass, and even more preferably at least 2 parts by mass but not more than 13 parts by mass.

In those cases where the ovenware comprises a pigment, the blend amount of the pigment, per 100 parts by mass of the liquid crystal polyester resin, is preferably at least 1 part by mass but not more than 10 parts by mass, more preferably at least 1 part by mass but not more than 5 parts by mass, and even more preferably at least 2 parts by mass but not more than 3 parts by mass. When one, or two or more, of the above pigments are used as the pigment, the total amount of all the blended pigments preferably satisfies this range.

The ovenware described above is preferably molded from a resin composition having a deflection temperature under load of at least 250°C but less than 270°C. In other words, the ovenware described above is preferably a molded body of a resin composition having a deflection temperature under load of at least 250°C but less than 270°C.

Further disclosed herein is the use of a resin composition comprising a liquid crystal polyester resin, a talc filler and a titanium oxide filler for molding ovenware.

### EXAMPLES

The present invention is described more specifically below using a series of examples, but the present invention is in no way limited by the following examples.

### [Method for Producing Liquid Crystal Polyester 1]

A reactor fitted with a stirring device, a torque meter, a nitrogen gas introduction tube, a thermometer and a reflux condenser was charged with 994.5 g (7.2 mol) of para-hydroxybenzoic acid, 446.9 g (2.4 mol) of 4,4'-dihydroxybiphenyl, 299.0 g (1.8 mol) of terephthalic acid, 99.7 g (0.6 mol) of isophthalic acid and 1,347.6 (13.2 mol) of acetic anhydride, 0.2 g of 1-methylimidazole was added, and the inside of the reactor was flushed thoroughly with nitrogen gas.

Subsequently, the temperature was raised, under a stream of nitrogen gas, from room temperature to 150°C over a period of 30 minutes, and the reaction mixture was refluxed for one hour at the same temperature.

Next, the temperature was raised from 150°C to 320°C over a period of 2 hours and 50 minutes, while by-product acetic acid and unreacted acetic anhydride were removed by distillation, and the point when an increase in torque was confirmed was deemed the end of the reaction, yielding a prepolymer.

The obtained prepolymer was cooled to room temperature, and then crushed using a coarse crusher. The thus obtained prepolymer powder was heated, under an atmosphere of nitrogen, from room temperature to 250°C over a period of one hour, and then from 250°C to 285°C over a period of 5 hours, and was then held at 285°C for 3 hours to effect a solid phase polymerization. The flow beginning temperature of the obtained liquid crystal polyester 1 was 327°C.

### [Method for Producing Liquid Crystal Polyester 2]

A reactor fitted with a stirring device, a torque meter, a nitrogen gas introduction tube, a thermometer and a reflux condenser was charged with 994.5 g (7.2 mol) of para-hydroxybenzoic acid, 446.9 g (2.4 mol) of 4,4'-dihydroxybiphenyl, 239.2 g (1.4 mol) of terephthalic acid, 159.5 g (1.0 mol) of isophthalic acid and 1,347.6 (13.2 mol) of acetic anhydride, 0.2 g of 1-methylimidazole was added, and the inside of the reactor was flushed thoroughly with nitrogen gas.

Subsequently, the temperature was raised, under a stream of nitrogen gas, from room temperature to 150°C over a period of 30 minutes, and the reaction mixture was refluxed for one hour at the same temperature.

Next, the temperature was raised from 150°C to 320°C over a period of 2 hours and 50 minutes, while by-product acetic acid and unreacted acetic anhydride were removed by distillation, and the point when an increase in torque was confirmed was deemed the end of the reaction, yielding a prepolymer.

The obtained prepolymer was cooled to room temperature, and then crushed using a coarse crusher. The thus obtained prepolymer powder was heated, under an atmosphere of nitrogen, from room temperature to 190°C over a period of one hour, and then from 190°C to 240°C over a period of 5 hours, and was then held at 240°C for 8 hours to effect a solid phase polymerization. The flow beginning temperature of the obtained liquid crystal polyester 2 was 290°C.

### [Method for Producing Liquid Crystal Polyester 3]

A reactor fitted with a stirring device, a torque meter, a nitrogen gas introduction tube, a thermometer and a reflux condenser was charged with 1,130.4 g (8.2 mol) of para-hydroxybenzoic acid, 128.4 g (0.7 mol) of 6-hydroxy-2-naphthoic acid, 52.2 g (1.7 mol) of 4,4'-dihydroxybiphenyl, 400.8 g (2.4 mol) of terephthalic acid, 103.2 g (0.7 mol) of 4-acetoxyaminophenol and 1,357.6 (13.3 mol) of acetic anhydride, 0.2 g of 1-methylimidazole was added, and the inside of the reactor was flushed thoroughly with nitrogen gas.

Subsequently, the temperature was raised, under a stream of nitrogen gas, from room temperature to 150°C over a period of 30 minutes, and the reaction mixture was refluxed for one hour at the same temperature.

Next, the temperature was raised from 150°C to 340°C over a period of 4 hours and 30 minutes while by-product acetic acid and unreacted acetic anhydride were removed by distillation, and the pressure was then reduced to 10 Torr (wherein 1 Torr indicates 1 mmHg) and by-product acetic acid and unreacted acetic anhydride were removed by distillation, yielding a liquid crystal polyester 3 having a flow beginning temperature of 320°C.

### [Method for Producing Liquid Crystal Polyester 4]

A reactor fitted with a stirring device, a torque meter, a nitrogen gas introduction tube, a thermometer and a reflux condenser was charged with 1,130.4 g (8.2 mol) of para-hydroxybenzoic acid, 128.4 g (0.7 mol) of 6-hydroxy-2-naphthoic acid, 52.2 g (1.7 mol) of 4,4'-dihydroxybiphenyl, 400.8 g (2.4 mol) of terephthalic acid, 103.2 g (0.7 mol) of 4-acetoxyaminophenol and 1,357.6 (13.3 mol) of acetic anhydride, 0.2 g of 1-methylimidazole was added, and the inside of the reactor was flushed thoroughly with nitrogen gas.

Subsequently, the temperature was raised, under a stream of nitrogen gas, from room temperature to 150°C over a period of 30 minutes, and the reaction mixture was refluxed for one hour at the same temperature.

Next, the temperature was raised from 150°C to 360°C over a period of 6 hours and 30 minutes while by-product acetic acid and unreacted acetic anhydride were removed by distillation, and the pressure was then reduced to 10 Torr and by-product acetic acid and unreacted acetic anhydride were removed by distillation, yielding a liquid crystal polyester 4 having a flow beginning temperature of 350°C.

### [Production of Liquid Crystal Polyester Resin Compositions]

Using the blend ratios shown below in Table 1, talc, titanium oxide and carbon black were blended with the liquid crystal polyesters 1 to 4 obtained above.

Subsequently, a twin screw extruder (PCM-30, manufactured by Ikegai, Ltd.) was used to obtain liquid crystal polyester resin compositions.

### [Production of Ovenware]

The obtained liquid crystal polyester resin compositions were molded at 330°C to 340°C using an injection molding machine to obtain ovenware.

**[Table 1]**

| | Liquid Crystal Polyester | Talc | Glass fiber | Titanium oxide | Pigment | Ovenware shape |
|---|---|---|---|---|---|---|
| Example 1 | LCP-1 [100] | Talc A [61] | - | Titanium oxide 1 [2] | CB1 [2] | F |
| Example 2 | LCP-1 [100] | Talc A [67] | - | Titanium oxide 1 [2] | CB1 [2] | F |
| Example 3 | LCP-1 [100] | Talc A [72] | - | Titanium oxide 1 [9] | CB1 [3] | F |
| Example 4 | LCP-1 [100] | Talc A [79] | - | Titanium oxide 1 [9] | CB1 [3] | F |
| Example 5 | LCP-1 [100] | Talc A [79] | - | Titanium oxide 1 [13] | CB1 [3] | F |
| Example 6 | LCP-1 [100] | Talc A [79] | - | Titanium oxide 1 [18] | CB1 [3] | F |
| Example 7 | LCP-4 [100] | Talc B [67] | - | Titanium oxide 1 [2] | CB1 [2] | F |
| Example 8 | LCP-1 [100] | Talc C [79] | - | Titanium oxide 1 [9] | CB1 [3] | F |
| Example 9 | LCP-1 [100] | Talc C [79] | - | Titanium oxide 1 [13] | CB1 [3] | F |
| Example 10 | LCP-1 [100] | Talc C [79] | - | Titanium oxide 1 [7] | CB2 [2] | F |
| Example 11 | LCP-1 [100] | Talc C [79] | - | Titanium oxide 1 [4] | Iron oxide [4] | F |
| Example 12 | LCP-1 [100] | Talc A [72] | - | Titanium oxide 2 [9] | CB1 [3] | F |
| Example 13 | LCP-2 [100] | Talc A [61] | - | Titanium oxide 1 [2] | CB1 [2] | F |
| Example 14 | LCP-3 [100] | Talc B [67] | - | Titanium oxide 1 [2] | CB1 [2] | F |
| Comparative Example 1 | LCP-1 [100] | Talc A [54] | - | - | CB1 [2] | F |
| Comparative Example 2 | LCP-1 [100] | - | GF [67] | - | CB1 [2] | G |
| Reference Example 1 | LCP-2 [100] | Talc A [61] | - | Titanium oxide 1 [2] | CB1 [2] | G |
| Reference Example 2 | LCP-1 [100] | Talc A [79] | - | Titanium oxide 1 [18] | CB1 [3] | G |

In Table 1, the values inside [ ] indicate blend ratios (parts by mass).

In Table 1, the symbols used have the following meanings.
- LCP-1 to LCP-4: the liquid crystal polyesters 1 to 4 described above
- Talc A: "X-50" manufactured by Nippon Talc Co., Ltd., average particle size: 20 µm
- Talc B: "RL1 10" manufactured by Fuji Talc Industrial Co., Ltd., average particle size: 15 µm
- Talc C: "MS-KY" manufactured by Nippon Talc Co., Ltd., average particle size: 23 µm
- GF: "EHF75-01" manufactured by Central Glass Fiber Co., Ltd.
- Titanium oxide 1: "CR-60" manufactured by Ishihara Sangyo Kaisha, Ltd., average particle size: 0.21 µm
- Titanium oxide 2: "CR-58" manufactured by Ishihara Sangyo Kaisha, Ltd., average particle size: 0.28 µm
- CB1: carbon black "#45LB" manufactured by Mitsubishi Chemical Corporation
- CB2: carbon black "BLACK PEARLS 4350" manufactured by Cabot Corporation
- Iron oxide: "130ED" manufactured by Toda Pigment Corporation
- F: an ovenware shape, capacity: 3.6 L, wall thickness: 2 mm, having handles
- G: an ovenware shape, capacity: 200 mL, wall thickness: 2 mm, having handles

### [Evaluations]

The deflection temperature under load was evaluated for each of the obtained liquid crystal polyester resin compositions. Further, the obtained ovenware was also evaluated for external appearance 1 and external appearance 2.

### [Deflection Temperature Under Load]

The deflection temperature under load (DTUL, units °C) was measured in accordance with ASTM D648. The result is shown in Table 2 as "DTUL (°C)".

### [External Appearance 1]

The external appearance of the molded ovenware was inspected visually, and the visibility of flow marks was evaluated against the following scale.
1: even when the inspected surface is viewed from two or more meters away, flow marks are readily visible
2: when viewed from within one meter of the inspected surface, flow marks are readily visible from any direction
3: when viewed from within one meter of the inspected surface, flow marks are readily visible when viewed from a perpendicular direction or from a 45° angle
4: when viewed from within one meter of the inspected surface, flow marks are only readily visible when viewed from a 45° angle
5: when viewed from within one meter of the inspected surface, flow marks are almost invisible from any angle

### [External Appearance 2]

The external appearance of the molded ovenware was inspected visually and evaluated. The evaluation was performed by having 10 people inspect the external appearance of the ovenware, and asking them whether or not they felt there was any problem with the external appearance of the ovenware. The number of people who concluded that there was a problem with the external appearance is recorded in Table 2. Items that were not evaluated are indicated by "-" in Table 2.

**[Table 2]**

| | DTUL (°C) | External appearance 1 | External appearance 2 |
|---|---|---|---|
| Example 1 | 258 | 3 | 8 |
| Example 2 | 258 | 3 | 6 |
| Example 3 | 258 | 5 | - |
| Example 4 | 260 | 5 | - |
| Example 5 | 258 | 4 | 1 |
| Example 6 | 258 | 2 | - |
| Example 7 | 255 | 5 | 0 |
| Example 8 | 259 | 5 | 0 |
| Example 9 | 257 | 5 | 0 |
| Example 10 | 264 | 5 | 0 |
| Example 11 | 264 | 5 | 0 |
| Example 12 | 258 | 4 | 1 |
| Example 13 | 224 | 3 | - |
| Example 14 | 240 | 5 | - |
| Comparative Example 1 | 258 | 1 | 10 |
| Comparative Example 2 | 280 | 1 | - |
| Reference Example 1 | 224 | 4 | 0 |
| Reference Example 2 | 258 | 3 | - |

Reference Example 1 is an example in which the same resin composition as Example 12 was used to produce small ovenware with a capacity of 200 mL. Based on the results for Reference Example 1 and Example 12, it is evident that when injection molding smaller ovenware, external appearance defects are less likely to occur, or are less noticeable, than when injection molding large ovenware.

The Reference Example 2 is an example in which the same resin composition as Example 6 was used to produce small ovenware with a capacity of 200 mL. Based on the results for Reference Example 2 and Example 6, it is evident that when injection molding smaller ovenware, external appearance defects are less likely to occur, or are less noticeable, than when injection molding large ovenware.

As shown in Table 2, in the ovenware of the present invention, flow marks were either suppressed or did not occur, resulting in good external appearance, and the strength was also excellent.

### INDUSTRIAL APPLICABILITY

The present invention can provide large ovenware having excellent external appearance, and the invention is therefore extremely useful industrially.

### DESCRIPTION OF THE REFRENCE SIGNS

1: Ovenware
2: Handle portion
10: Container portion
11: Bottom portion
12: Side wall
S: Space
20: Lid portion

## Claims

1. Ovenware having a container portion and a handle portion, wherein
the ovenware is molded from a resin composition comprising a liquid crystal polyester resin and a talc filler,
wherein an average particle size of the talc filler is at least 10 µm but not more than 25 µm,
an amount of the talc filler is at least 55 parts by mass but not more than 100 parts by mass per 100 parts by mass of the liquid crystal polyester resin,
a capacity of the ovenware is at least 500 mL but not more than 6 L, and
a wall thickness of the container portion is at least 0.3 mm but not more than 5 mm.

2. The ovenware according to Claim 1, wherein the liquid crystal polyester resin has at least one repeating unit represented by general formula (1) shown below:
(1) -O-Ar¹-CO-
wherein Ar¹ represents a phenylene group, naphthylene group or biphenylylene group, and at least one hydrogen atom in a group represented by Ar¹ may, independently, be substituted with a halogen atom, an alkyl group or an aryl group.

3. The ovenware according to Claim 2, wherein the repeating unit represented by general formula (1) is a repeating unit derived from para-hydroxybenzoic acid, and an amount of that repeating unit, relative to a total amount of all repeating units that constitute the liquid crystal polyester, is at least 50 mol% but not more than 70 mol%.

4. The ovenware according to any one of Claims 1 to 3, wherein the liquid crystal polyester resin has at least one repeating unit represented by general formula (2) shown below:
(2) -CO-Ar²-CO-
wherein Ar² represents a phenylene group, naphthylene group, biphenylylene group or a group represented by general formula (4) shown below, and at least one hydrogen atom in a group represented by Ar² may, independently, be substituted with a halogen atom, an alkyl group or an aryl group,
(4) -Ar⁴-Z-Ar⁵-
wherein each of Ar⁴ and Ar⁵ independently represents a phenylene group or a naphthylene group, and Z represents an oxygen atom, sulfur atom, carbonyl group, sulfonyl group or alkylidene group.

5. The ovenware according to Claim 4, wherein the repeating unit represented by general formula (2) is a repeating unit derived from terephthalic acid, and an amount of that repeating unit, relative to a total amount of all repeating units that constitute the liquid crystal polyester, is at least 10 mol% but not more than 20 mol%.

6. The ovenware according to any one of Claims 1 to 5, wherein the liquid crystal polyester resin has at least one repeating unit represented by general formula (3) shown below:
(3) -X-Ar³-Y-
wherein Ar³ represents a phenylene group, naphthylene group, biphenylylene group or a group represented by general formula (4) shown below, each of X and Y independently represents an oxygen atom or an imino group (-NH-), and at least one hydrogen atom in a group represented by Ar³ may, independently, be substituted with a halogen atom, an alkyl group or an aryl group,
(4) -Ar⁴-Z-Ar⁵-
wherein each of Ar⁴ and Ar⁵ independently represents a phenylene group or a naphthylene group, and Z represents an oxygen atom, sulfur atom, carbonyl group, sulfonyl group or alkylidene group.

7. The ovenware according to Claim 6, wherein an amount of the repeating unit represented by general formula (3), relative to a total amount of all repeating units that constitute the liquid crystal polyester, is not more than 35 mol%.

8. The ovenware according to any one of Claims 1 to 7, wherein the resin composition also comprises a titanium oxide filler.

9. The ovenware according to any one of Claims 1 to 8, wherein a fill amount of the titanium oxide filler is at least 1 part by mass but not more than 15 parts by mass per 100 parts by mass of the liquid crystal polyester resin.

10. The ovenware according to any one of Claims 1 to 9, wherein the resin composition also comprises a pigment.

11. The ovenware according to any one of Claims 1 to 10, wherein a deflection temperature under load for the resin composition is at least 250°C but less than 270°C.

## Patentansprüche

1. Feuerfestes Geschirr mit einem Behälterabschnitt und einem Griffabschnitt, wobei
das feuerfeste Geschirr aus einer Harzzusammensetzung geformt ist, die ein Flüssigkristall-Polyesterharz und einen Talkfüllstoff umfasst,
wobei eine durchschnittliche Teilchengröße des Talkfüllstoffs mindestens 10 µm, aber nicht mehr als 25 µm beträgt,
eine Menge des Talkfüllstoffs mindestens 55 Massenteile, aber nicht mehr als 100 Massenteile pro 100 Massenteile des Flüssigkristall-Polyesterharzes beträgt,
eine Kapazität des feuerfesten Geschirrs mindestens 500 mL, aber nicht mehr als 6 L beträgt, und
eine Wanddicke des Behälterabschnitts mindestens 0,3 mm, aber nicht mehr als 5 mm beträgt.

2. Feuerfestes Geschirr nach Anspruch 1, wobei das Flüssigkristall-Polyesterharz mindestens eine Wiederholungseinheit aufweist, die durch die nachstehend gezeigte allgemeine Formel (1) dargestellt wird:
(1) -O-Ar¹-CO-
wobei Ar¹ eine Phenylengruppe, eine Naphthylengruppe oder eine Biphenylylengruppe darstellt, und mindestens ein Wasserstoffatom in einer durch Ar¹ dargestellten Gruppe unabhängig voneinander mit einem Halogenatom, einer Alkylgruppe oder einer Arylgruppe substituiert sein kann.

3. Feuerfestes Geschirr nach Anspruch 2, wobei die durch die allgemeine Formel (1) dargestellte Wiederholungseinheit eine von para-Hydroxybenzoesäure abgeleitete Wiederholungseinheit ist, und eine Menge dieser Wiederholungseinheit relativ zu einer Gesamtmenge aller Wiederholungseinheiten, die das Flüssigkristallpolyester bilden, mindestens 50 Mol-%, aber nicht mehr als 70 Mol-% beträgt.

4. Feuerfestes Geschirr nach einem der Ansprüche 1 bis 3, wobei das Flüssigkristall-Polyesterharz mindestens eine Wiederholungseinheit aufweist, die durch die nachstehend gezeigte allgemeine Formel (2) dargestellt wird:
(2) -CO-Ar²-CO-
wobei Ar² eine Phenylengruppe, eine Naphthylengruppe, eine Biphenylylengruppe oder eine durch die nachstehend gezeigte allgemeine Formel (4) dargestellte Gruppe darstellt, und mindestens ein Wasserstoffatom in einer durch Ar² dargestellten Gruppe unabhängig voneinander mit einem Halogenatom, einer Alkylgruppe oder einer Arylgruppe substituiert sein kann,
(4) -Ar⁴-Z-Ar⁵-
wobei jedes von Ar⁴ und Ar⁵ unabhängig voneinander eine Phenylengruppe oder eine Naphthylengruppe darstellt, und Z ein Sauerstoffatom, ein Schwefelatom, eine Carbonylgruppe, eine Sulfonylgruppe oder eine Alkylidengruppe darstellt.

5. Feuerfestes Geschirr nach Anspruch 4, wobei die durch die allgemeine Formel (2) dargestellte Wiederholungseinheit eine von Terephthalsäure abgeleitete Wiederholungseinheit ist, und eine Menge dieser Wiederholungseinheit relativ zu einer Gesamtmenge aller Wiederholungseinheiten, die das Flüssigkristallpolyester bilden, mindestens 10 Mol-%, aber nicht mehr als 20 Mol-% beträgt.

6. Feuerfestes Geschirr nach einem der Ansprüche 1 bis 5, wobei das Flüssigkristall-Polyesterharz mindestens eine Wiederholungseinheit aufweist, die durch die nachstehend gezeigte allgemeine Formel (3) dargestellt wird:
(3) -X-Ar³-Y-
wobei Ar³ eine Phenylengruppe, eine Naphthylengruppe, eine Biphenylylengruppe oder eine durch die nachstehend gezeigte allgemeine Formel (4) dargestellte Gruppe darstellt, jedes von X und Y unabhängig voneinander ein Sauerstoffatom oder eine Iminogruppe (-NH-) darstellt, und mindestens ein Wasserstoffatom in einer durch Ar³ dargestellten Gruppe unabhängig voneinander mit einem Halogenatom, einer Alkylgruppe oder einer Arylgruppe substituiert sein kann,
(4) -Ar⁴-Z-Ar⁵-
wobei jedes von Ar⁴ und Ar⁵ unabhängig voneinander eine Phenylengruppe oder eine Naphthylengruppe darstellt, und Z ein Sauerstoffatom, ein Schwefelatom, eine Carbonylgruppe, eine Sulfonylgruppe oder eine Alkylidengruppe darstellt.

7. Feuerfestes Geschirr nach Anspruch 6, wobei eine Menge der durch die allgemeine Formel (3) dargestellten Wiederholungseinheit relativ zu einer Gesamtmenge aller Wiederholungseinheiten, die das Flüssigkristallpolyester bilden, nicht mehr als 35 Mol-% beträgt.

8. Feuerfestes Geschirr nach einem der Ansprüche 1 bis 7, wobei die Harzzusammensetzung auch einen Titanoxidfüllstoff umfasst.

9. Feuerfestes Geschirr nach einem der Ansprüche 1 bis 8, wobei eine Füllmenge des Titanoxidfüllstoffs mindestens 1 Massenteil, aber nicht mehr als 15 Massenteile pro 100 Massenteile des Flüssigkristall-Polyesterharzes beträgt.

10. Feuerfestes Geschirr nach einem der Ansprüche 1 bis 9, wobei die Harzzusammensetzung auch ein Pigment umfasst.

11. Feuerfestes Geschirr nach einem der Ansprüche 1 bis 10, wobei eine Formbeständigkeitstemperatur für die Harzzusammensetzung mindestens 250 °C, aber weniger als 270 °C beträgt.

## Revendications

1. Plat allant au four présentant une partie récipient et une partie poignée, dans lequel
le plat allant au four est moulé à partir d'une composition de résine comprenant une résine polyester à cristaux liquides et une matière de remplissage en talc,
dans lequel une taille de particule moyenne de la matière de remplissage en talc est d'au moins 10 µm mais pas de plus de 25 µm,
une quantité de la matière de remplissage en talc est d'au moins 55 parties en masse mais pas de plus de 100 parties en masse pour 100 parties en masse de la résine polyester à cristaux liquides,
une capacité du plat de four est d'au moins 500 ml mais pas de plus de 6 1, et
une épaisseur de paroi de la partie récipient est d'au moins 0,3 mm mais pas de plus de 5 mm.

2. Plat allant au four selon la revendication 1, dans lequel la résine polyester à cristaux liquides présente au moins une unité de répétition représentée par la formule générale (1) montrée ci-dessous :
(1) -O-Ar¹-CO-
dans laquelle Ar¹ représente un groupe phénylène, un groupe naphtylène ou un groupe biphénylylène, et au moins un atome d'hydrogène dans un groupe représenté par Ar¹ peut, indépendamment, être substitué par un atome d'halogène, un groupe alkyle ou un groupe aryle.

3. Plat allant au four selon la revendication 2, dans lequel l'unité de répétition représentée par la formule générale (1) est une unité de répétition dérivée de l'acide para-hydroxybenzoïque, et une quantité de cette unité de répétition, par rapport à une quantité totale de toutes les unités de répétition qui constituent le polyester à cristaux liquides, est d'au moins 50 % en moles mais pas de plus de 70 % en moles.

4. Plat allant au four selon l'une quelconque des revendications 1 à 3, dans lequel la résine polyester à cristaux liquides présente au moins une unité de répétition représentée par la formule générale (2) montrée ci-dessous :
(2) -CO-Ar²-CO-
dans laquelle Ar² représente un groupe phénylène, un groupe naphtylène, un groupe biphénylylène ou un groupe représenté par la formule générale (4) montrée ci-dessous, et au moins un atome d'hydrogène dans un groupe représenté par Ar² peut, indépendamment, être substitué par un atome d'halogène, un groupe alkyle ou un groupe aryle,
(4) -Ar⁴-Z-Ar⁵-
dans laquelle chacun parmi Ar⁴ et Ar⁵ représente indépendamment un groupe phénylène ou un groupe naphtylène, et Z représente un atome d'oxygène, un atome de soufre, un groupe carbonyle, un groupe sulfonyle ou un groupe alkylidène.

5. Plat allant au four selon la revendication 4, dans lequel l'unité de répétition représentée par la formule générale (2) est une unité de répétition dérivée de l'acide téréphtalique, et une quantité de cette unité de répétition, par rapport à une quantité totale de toutes les unités de répétition qui constituent le polyester à cristaux liquides, est d'au moins 10 % en moles mais pas de plus de 20 % en moles.

6. Plat allant au four selon l'une quelconque des revendications 1 à 5, dans lequel la résine polyester à cristaux liquides présente au moins une unité de répétition représentée par la formule générale (3) montrée ci-dessous :
(3) -X-Ar³-Y-
dans laquelle Ar³ représente un groupe phénylène, un groupe naphtylène, un groupe biphénylylène ou un groupe représenté par la formule générale (4) montrée ci-dessous, chacun parmi X et Y représente indépendamment un atome d'oxygène ou un groupe imino (-NH-), et au moins un atome d'hydrogène dans un groupe représenté par Ar³ peut, indépendamment, être substitué par un atome d'halogène, un groupe alkyle ou un groupe aryle,
(4) -Ar⁴-Z-Ar⁵-
dans laquelle chacun parmi Ar⁴ et Ar⁵ représente indépendamment un groupe phénylène ou un groupe naphtylène, et Z représente un atome d'oxygène, un atome de soufre, un groupe carbonyle, un groupe sulfonyle ou un groupe alkylidène.

7. Plat allant au four selon la revendication 6, dans lequel une quantité de l'unité de répétition représentée par la formule générale (3), par rapport à une quantité totale de toutes les unités de répétition qui constituent le polyester à cristaux liquides, n'est pas de plus 35 % en moles.

8. Plat allant au four selon l'une quelconque des revendications 1 à 7, dans lequel la composition de résine comprend également une matière de remplissage en oxyde de titane.

9. Plat allant au four selon l'une quelconque des revendications 1 à 8, dans lequel une quantité de remplissage de la matière de remplissage en oxyde de titane est d'au moins 1 partie en masse mais pas de plus de 15 parties en masse pour 100 parties en masse de la résine polyester à cristaux liquides.

10. Plat allant au four selon l'une quelconque des revendications 1 à 9, dans lequel la composition de résine comprend également un pigment.

11. Plat allant au four selon l'une quelconque des revendications 1 à 10, dans lequel une température de fléchissement sous charge pour la composition de résine est d'au moins 250 °C mais de moins de 270 °C.
